# EUROPEAN PATENT SPECIFICATION

(11) **EP 3 397 874 B1**
(45) Date of publication and mention of the grant of the patent: **11.03.2020**
(21) Application number: 17705549.8
(22) Date of filing: 03.01.2017
(51) Int. Cl.: F16F 9/512

(54) **IMPROVEMENT TO FREQUENCY DEPENDENT VALVES**
VERBESSERUNG AN FREQUENZABHÄNGIGEN VENTILEN
PERFECTIONNEMENT APPORTÉ À DES SOUPAPES VARIANT AVEC LA FRÉQUENCE

(30) Priority: 03.01.2016 BE 201600014
(43) Date of publication of application: 07.11.2018
(73) Proprietor: Yan, Shi, 52078 Aachen (DE)
(72) Inventor: Yan, Shi, 52078 Aachen (DE)
(86) International application number: PCT/BE2017/000005
(87) International publication number: WO 2017/112981

(56) References cited:
- WO-A1-2015/185274
- DE-A1-102013 114 169
- DE-A1-102015 205 556

## Description

### FIELD OF THE INVENTION

The present disclosure relates to hydraulic shock absorbers and dampers which can be adapted for use in a suspension system such as the systems used for transportation vehicles. More particularly, the present disclosure relates to a frequency dependent shock absorber, to provide different damping characteristics when subjected to input of differing frequencies.

### BACKGROUND OF THE INVENTION AND PRIOR ART

Frequency dependent valves such as those described in WO03040586, WO2015130544, WO2015030884, typically contain a pressure chamber, whose change in volume is related to change in preload force on a valve assembly which throttles a fluid stream. Typically, movement which results in increase in preload force of the valve assembly is mostly opposed by reaction force from the valve assembly itself, but this sometimes results in sharp changes in pressure drop during a damper's stroke which is undesirable.

Document WO 2015/185274 A1, which is considered to be the closest prior art, discloses the features of independent claims 1 and 2.

### SUMMARY OF THE INVENTION

The present invention solves all the problems mentioned above as per the claims annexed to the present disclosure.

### BRIEF DESCRIPTION OF THE DRAWINGS

The accompanying drawings comprise:
**Figure 1** shows a diagram illustrating the functioning of a valve according to the present invention.
**Figure 2** shows a diagram illustrating a functional alternative with respect to the one depicted in figure 1, with some additional optional elements.
**Figure 3** shows a first embodiment of the current invention
**Figure 4** shows a second embodiment of the current invention
**Figure 5** shows a third embodiment of the current invention
**Figure 6** shows a fourth embodiment of the current invention

### DESCRIPTION OF REFERENCE NUMERALS

**1: Frequency dependent valve**
**10: Piston**
**11: Flow channel**
**30: Piston rod**
**100: Valve assembly**
**150: Fluid flow**
**300: Pressure chamber**
   **301: Chamber wall**
**370: Spring element**
**380: Flow restrictor**
**390: Check valve**

### DETAILED DESCRIPTION OF THE DRAWINGS

The following description of the preferred embodiments is merely exemplary in nature and is in no way intended to limit the disclosure, its applications, or uses. Whenever the same reference number occur on different drawings, the same reference number designates similar or corresponding parts throughout the different drawings.

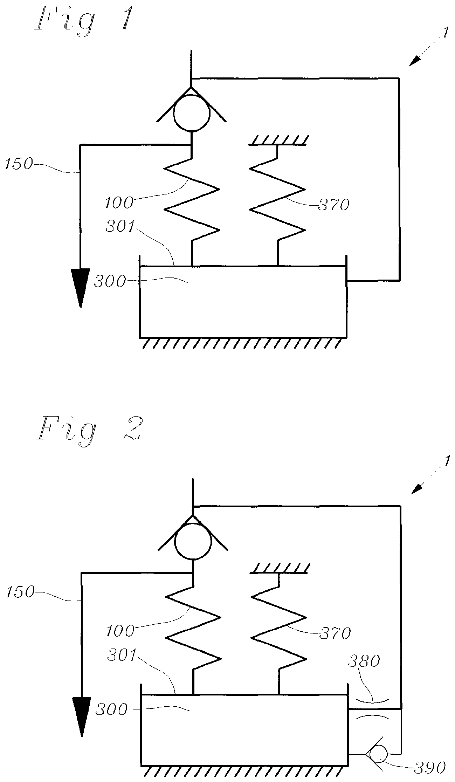

**Figure 1** shows a diagram illustrating the functioning of a valve according to the present invention:
A valve **(1)** compring:
   a pressure chamber **(300)**;
   a valve assembly **(100)** controlling a passage of fluid **(150)**, the valve assembly **(100)** being configured in such a way that its preload force is controlled by the pressure chamber **(300)**;
   a spring element **(370)** that helps the valve assembly **(100)** oppose change in volume of the pressure chamber **(300)**, its preload force also controlled by the pressure chamber **(300)**;
**characterized in that:**
   for a given change in volume of the pressure chamber **(300),** reaction force from the spring element **(370)** changes faster than reaction force of the valve assembly **(100).**

When the pressure chamber **(300)** expands, the chamber wall **(301)** deforms and/or moves towards the main valve assembly **(100).** As a result the main valve assembly **(100)** receives a preloading force from the pressure chamber **(300),** at the same time the main valve assembly **(100)** imparts a reaction force of the same magnitude to the pressure chamber **(300),** opposing its expansion.

It is advantageous, for an improved frequency dependency performance, to have a spring element **(370)**, which can be tuned, to help return the pressure chamber **(300)** back to its resting volume more quickly than would be in the case without the helping element **(370).** The helping element **(370)** imparts an additional force opposing the change in volume of the pressure chamber **(300)**, which does so without adding to the preload force on the valve assembly **(100).**

**Figure 2** shows a diagram illustrating a functional alternative with respect to the one depicted in figure 1, with some additional optional elements. Flow restrictor **(380)** slows down fluid flow into the pressure chamber **(300)** and check valve **(390)** allows fast fluid exit out of the pressure chamber **(300).**

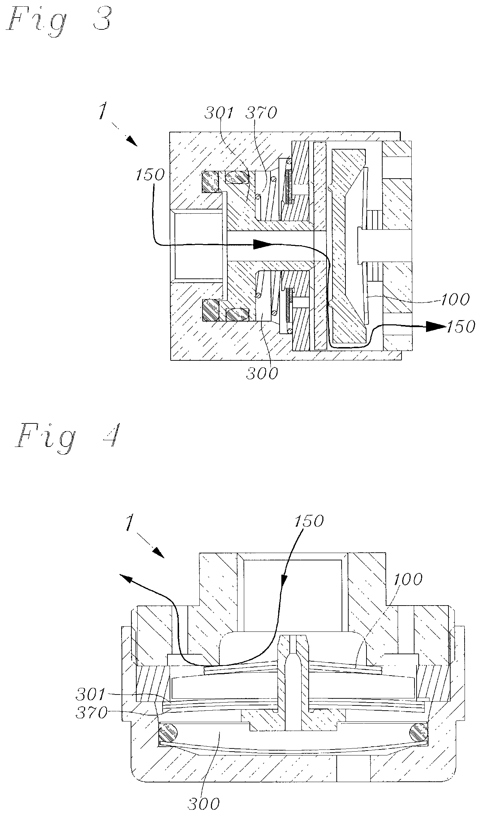

Structural representations of embodiments corresponding to the diagram of **Figure 2** are shown in **Figures 3-4****:**
A valve **(1)** compring:
   a pressure chamber **(300)**;
   a valve assembly **(100)** controlling a passage of fluid **(150)**, the valve assembly **(100)** being configured in such a way that its preload force is controlled by the pressure chamber **(300)**;
   a spring element **(370)** that helps the valve assembly **(100)** oppose change in volume of the pressure chamber **(300)**, its preload force also controlled by the pressure chamber **(300)**;
**characterized in that:**
   for a given change in volume of the pressure chamber **(300)**, reaction force from the spring element **(370)** changes faster than reaction force of the valve assembly **(100).**

Furthermore, in **Figures 3 and 4****:**
said pressure chamber **(300)** comprises a moveable and / or deformable chamber wall **(301)**,
said spring element **(370)** is configured to oppose movement or deformation of said chamber wall **(301)** which results in increased preload of said valve assembly **(100)**;
said spring element **(370)** is higher in stiffness than said valve assembly **(100).**

**Figure 3** shows an embodiment of the invention applied to a valve described in WO2015030884. In this valve **(1)**, movement of chamber wall **(301)** towards the valve assembly **(100)** reduced volume of the pressure chamber **(300)** and preloads the valve assembly **(100)**, so that the valve assembly throttles fluid flow **(150)** more. The spring element **(370)** helps the valve assembly **(100)** oppose change in volume of the pressure chamber **(300).**

**Figure 4** shows an embodiment of the invention applied to a valve described in WO03040586. In this valve **(1)**, movement of chamber wall **(301)** towards the valve assembly **(100)** increases volume of the pressure chamber **(300)** and preloads the valve assembly **(100)**, so that the valve assembly throttles fluid flow **(150)** more. The spring element **(370)** helps the valve assembly **(100)** oppose change in volume of the pressure chamber **(300).**

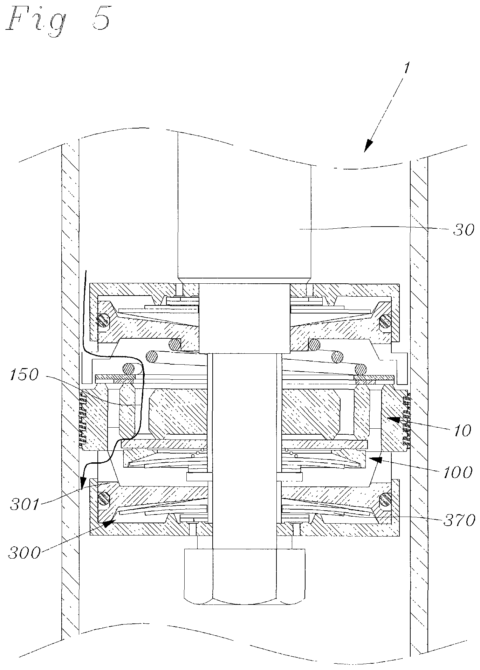

**Figure 5** shows an embodiment of the invention applied to a valve described in BE2016/0014. In this valve **(1)**, the piston **(10)** is able to slide on the piston rod **(30).** The valve assembly **(100)** is however fixed in its centre relative to the piston rod **(30).** Movement of the piston **(10)** relative to the piston rod **(30)** thus changes preload on the valve assembly **(100)**, so that the valve assembly throttles fluid flow **(150)** more. The movement of the piston **(10)** is controlled by the pressure chamber **(300)** so that change in volume of the pressure chamber **(300)** results in changed preload of the valve assembly **(100).** The spring element **(370)** helps the valve assembly **(100)** oppose change in volume of the pressure chamber **(300)**, and therefore movement of the piston **(10).**

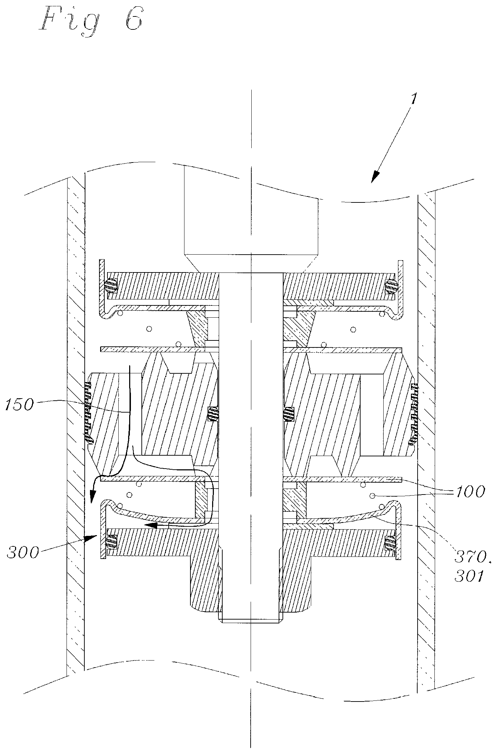

**Figure 6** shows an embodiment of the invention applied to a valve described in BE2016/0013. In this valve **(1)**, movement of chamber wall **(301)** towards the valve assembly **(100)** increases volume of the pressure chamber **(300)** and preloads the valve assembly **(100)**, so that the valve assembly throttles fluid flow **(150)** more. The spring element **(370)** helps the valve assembly **(100)** oppose change in volume of the pressure chamber **(300).** The spring element **(370)** is in this case the chamber wall itself **(301)**, configured so that for a given change in volume of the pressure chamber **(300)**, reaction force from the spring element **(370)** changes faster than reaction force of the valve assembly **(100).**

While the present invention has been described with reference to the embodiments, it will be apparent to those skilled in the art that various changes and modifications may be made as defined in the following claims.

## Claims

1. A valve **(1)** comprises:
a pressure chamber **(300)**;
a valve assembly **(100)** controlling a passage of fluid **(150)**, said valve assembly **(100)** being configured in such a way that its preload force is controlled by said pressure chamber **(300)**;
a spring element **(370)** that helps said valve assembly **(100)** oppose change in volume of said pressure chamber **(300)**, its preload force also controlled by said pressure chamber **(300)**;
for a given change in volume of said pressure chamber **(300)**, reaction force from said spring element **(370)** changes faster than reaction force of said valve assembly **(100)**;
**characterised in that**:
said spring element **(370)** and said valve assembly **(100)** are configured as springs operating mechanically in parallel with respect to said pressure chamber **(300).**

2. A valve **(1)** comprises:
a pressure chamber **(300)**;
a valve assembly **(100)** controlling a passage of fluid **(150)**, said valve assembly **(100)** being configured in such a way that its preload force is controlled by said pressure chamber **(300)** by receiving a preloading force from said pressure chamber **(300)**, and at the same time said valve assembly **(100)** imparts an opposing reaction force of the same magnitude to said pressure chamber **(300)**;
**characterized in that:**
said valve **(1)** also comprises a spring element **(370)** that helps said valve assembly **(100)** oppose change in volume of said pressure chamber **(300)** by imparting an additional force opposing change in volume of said pressure chamber **(300)**, which does so without adding to the preload force on said valve assembly **(100)**, its preload force also being controlled by said pressure chamber **(300)**;
for a given change in volume of said pressure chamber **(300)**, reaction force from said spring element **(370)** changes faster than reaction force of said valve assembly **(100).**

3. A valve **(1)** according to Claim 1 or Claim 2,
**characterized in that:**
said pressure chamber **(300)** comprises a moveable and / or deformable chamber wall **(301)**,
said spring element **(370)** is configured to oppose movement or deformation of said chamber wall **(301)** which results in increased preload of said valve assembly **(100).**

4. A valve **(1)** according to one of the preceding claims,
**characterized in that:**
said spring element **(370)** is higher in stiffness than said valve assembly **(100).**

## Patentansprüche

1. Ventil (1), das Folgendes umfasst:
eine Druckkammer (300),
eine Ventilbaugruppe (100), die einen Durchgang von Fluid (150) regelt, wobei die Ventilbaugruppe (100) auf eine solche Weise konfiguriert ist, dass ihre Vorbelastungskraft durch die Druckkammer (300) geregelt wird,
ein Federelement (370), das die Ventilbaugruppe (100) dabei unterstützt, einer Änderung beim Volumen der Druckkammer (300) entgegenzuwirken, wobei seine Vorbelastungskraft ebenfalls durch die Druckkammer (300) geregelt wird,
wobei, für eine gegebene Änderung beim Volumen der Druckkammer (300), sich eine Reaktionskraft von dem Federelement (370) schneller ändert als eine Reaktionskraft der Ventilbaugruppe (100),
**dadurch gekennzeichnet, dass**:
das Federelement (370) und die Ventilbaugruppe (100) als Federn konfiguriert sind, die parallel in Bezug auf die Druckkammer (300) arbeiten.

2. Ventil (1), das Folgendes umfasst:
eine Druckkammer (300),
eine Ventilbaugruppe (100), die einen Durchgang von Fluid (150) regelt, wobei die Ventilbaugruppe (100) auf eine solche Weise konfiguriert ist, dass ihre Vorbelastungskraft durch Empfangen einer Vorbelastungskraft von der Druckkammer (300) durch die Druckkammer (300) geregelt wird und zur gleichen Zeit die Ventilbaugruppe (100) der Druckkammer (300) eine entgegengesetzte Reaktionskraft der gleichen Größe mitteilt,
**dadurch gekennzeichnet, dass**:
das Ventil (1) ebenfalls ein Federelement (370) umfasst, das die Ventilbaugruppe (100) dabei unterstützt, durch Mitteilen einer zusätzlichen Kraft, die einer Änderung beim Volumen der Druckkammer (300) entgegenwirkt, einer Änderung beim Volumen der Druckkammer (300) entgegenzuwirken, wobei es dies tut, ohne die Vorbelastungskraft an der Ventilbaugruppe (100) zu vergrößern, wobei seine Vorbelastungskraft ebenfalls durch die Druckkammer (300) geregelt wird,
wobei, für eine gegebene Änderung beim Volumen der Druckkammer (300), sich eine Reaktionskraft von dem Federelement (370) schneller ändert als eine Reaktionskraft der Ventilbaugruppe (100).

3. Ventil (1) nach Anspruch 1 oder Anspruch 2,
**dadurch gekennzeichnet, dass**:
die Druckkammer (300) eine bewegliche und/oder verformbare Kammerwand (301) umfasst,
das Federelement (370) dafür konfiguriert ist, einer Bewegung oder Verformung der Kammerwand (301), die zu einer gesteigerten Vorbelastung der Ventilbaugruppe (100) führt, entgegenzuwirken.

4. Ventil (1) nach einem der vorhergehenden Ansprüche,
**dadurch gekennzeichnet, dass**:
das Federelement (370) eine höhere Steifigkeit aufweist als die Ventilbaugruppe (100).

## Revendications

1. Soupape (1) comprenant :
une chambre de pression (300) ;
un ensemble de soupape (100) commandant un passage de fluide (150), ledit ensemble de soupape (100) étant configuré de telle manière que sa force de précharge est commandée par ladite chambre de pression (300) ;
un élément de ressort (370) qui aide ledit ensemble de soupape (100) à s'opposer au changement de volume de ladite chambre de pression (300), sa force de précharge également commandée par ladite chambre de pression (300) ;
pour un changement de volume donné de ladite chambre de pression (300), la force de réaction dudit élément de ressort (370) change plus vite que la force de réaction dudit ensemble de soupape (100) ;
**caractérisée en ce que** :
ledit élément de ressort (370) et ledit ensemble de soupape (100) sont configurés en tant que ressorts fonctionnant mécaniquement en parallèle par rapport à ladite chambre de pression (300).

2. Soupape (1) comprenant :
une chambre de pression (300) ;
un ensemble de soupape (100) commandant un passage de fluide (150), ledit ensemble de soupape (100) étant configuré de telle manière que sa force de précharge est commandée par ladite chambre de pression (300) en recevant une force de préchargement de ladite chambre de pression (300), et au même moment, ledit ensemble de soupape (100) transmet une force de réaction d'opposition de même grandeur à ladite chambre de pression (300) ;
**caractérisée en ce que** :
ladite soupape (1) comprend également un élément de ressort (370) qui aide ledit ensemble de soupape (100) à s'opposer au changement de volume de ladite chambre de pression (300) en transmettant une force supplémentaire s'opposant au changement de volume de ladite chambre de pression (300) qui le fait sans s'ajouter à la force de précharge sur ledit ensemble de soupape (100), sa force de précharge étant également commandée par ladite chambre de pression (300) ;
pour un changement de volume donné de ladite chambre de pression (300), la force de réaction dudit élément de ressort (370) change plus vite que la force de réaction dudit ensemble de soupape (100).

3. Soupape (1) selon la revendication 1 ou la revendication 2,
**caractérisée en ce que** :
ladite chambre de pression (300) comprend une paroi de chambre (301) mobile et/ou déformable,
ledit élément de ressort (370) est configuré pour s'opposer au mouvement ou à la déformation de ladite paroi de chambre (301), ce qui résulte en une précharge accrue dudit ensemble de soupape (100).

4. Soupape (1) selon l'une des revendications précédentes,
**caractérisée en ce que** :
ledit élément de ressort (370) a une plus grande rigidité que ledit ensemble de soupape (100).
